# EUROPÄISCHE PATENTSCHRIFT

(11) **EP 0 758 744 B1**
(45) Veröffentlichungstag und Bekanntmachung des Hinweises auf die Patenterteilung: **08.08.2001**
(21) Anmeldenummer: 96108419.1
(22) Anmeldetag: 28.05.1996
(51) Int. Cl.: G01M 17/007

(54) **Vorrichtung zur Durchführung eines Crashtests bei einem Fahrzeug**
Device for executing a crash test on a vehicle
Dispositif d'essai de collision de véhicule

(30) Priorität: 14.08.1995 DE 19529801
(43) Veröffentlichungstag der Anmeldung: 19.02.1997
(73) Patentinhaber: Ford Global Technologies, Inc., Dearborn, Michigan 48126-2490 (US)
(72) Erfinder: Cerny, Walter, 51109 Köln (DE)
(74) Vertreter: Bonsmann, Manfred, Dipl.-Ing.

(56) Entgegenhaltungen:
- IEEE TRANSACTIONS ONIECI, Bd. ieci-11, Nr. 1, Februar 1964, Seiten 44-49, XP000671916 SNIDER: "vehicle instrumentation for crash testing"

## Beschreibung

Die Erfindung betrifft eine Vorrichtung zur Durchführung eines Crashtests bei einem Fahrzeug, bei welcher das Fahrzeug auf einer Führungsbahn mittels einer Antriebseinrichtung beschleunigt wird, bevor es auf ein Hindernis aufprallt, mit einer dem Fahrzeug zugeordneten Datenerfassungseinheit.

Bei Crashtests werden Messungen über das Verhalten eines Fahrzeugs bei einer gewollt herbeigeführten Kollision mit einem Hindernis durchgeführt. Dabei werden die Meßdaten mittels Meßwertaufnehmern ermittelt und einer Datenerfassungseinheit zugeleitet.

Aus IEEE Transactions on IECI, February 1964, S. 44 - 49, ist es bekannt, die Datenerfassungseinheit in einem parallel zu dem Crashfahrzeug fahrenden Instrumentenfahrzeug anzuordnen, welches über ein quer zur Fahrtrichtung der beiden Fahrzeuge zwischen diesen angeordnetes elektrisches Kabel in Verbindung steht. Der Antrieb des Crashfahrzeugs erfolgt von einem auf der Spur des Instrumentenfahrzeugs vor diesem fahrenden Schleppfahrzeug, welches über ein schräg zur Fahrtrichtung verlaufendes Schleppkabel mit dem Crashfahrzeug verbunden ist. Diese bekannte Vorrichtung ist sehr aufwendig, da zum einen für die Durchführung des Crashtests drei Fahrzeuge erforderlich sind, nämlich das Schleppfahrzeug, das Crashfahrzeug und das Instrumentenfahrzeug. Darüber hinaus muß das Instrumentenfahrzeug, welches parallel zu dem Crashfahrzeug fährt, im Augenblick des Aufpralls des Crashfahrzeugs auf das Hindernis entsprechend abrupt abgebremst werden, da andernfalls die Meßkabelverbindung beschädigt wird.

Es ist weiterhin bekannt, die Datenerfassungseinheit in dem Crashfahrzeug mitzuführen. Die Installation der Datenerfassungseinheit in dem Fahrzeug erfordert einen erheblichen Zeitaufwand. Für unterschiedliche Fahrzeugtypen von Crashfahrzeugen sind unterschiedliche Befestigungsvorrichtungen für die Datenerfassungseinheit erforderlich. Von Nachteil ist weiterhin, daß die Testergebnisse durch die Masse der Datenerfassungseinheit und der hierzu erforderlichen Befestigungsvorrichtung beeinflußt wird. Weiterhin wird infolge der Installation der Datenerfassungseinheit in dem Crashfahrzeug der Schwerpunkt des Crashfahrzeuges verlagert, wodurch das Ergebnis eines Crashversuchs im Vergleich zu einem keine Datenerfassungseinheit aufweisenden Crashfahrzeug verändert wird.

Oft kommt es vor, daß infolge des Vorhandenseins der Datenerfassungseinheit keine Einhaltung des Testgewichtes und der vorgegebenen Achslasten möglich ist. Man versucht dann, durch eine Demontage nicht crashrelevanter Fahrzeugteile eine Reduzierung des Testgewichtes und eine Veschiebung der Achslastverteilung zu erreichen, was jedoch einen erheblichen Arbeitsaufwand mit sich bringt. Ein weiterer Nachteil der Anbringung der Datenerfassungseinheit in dem Crashfahrzeug besteht darin, daß dadurch die Datenerfassungseinheit nicht zentral verfügbar ist, wodurch eine Termingestaltung und eine Gestaltung der Art von Crashtests wenig flexibel wird. Sofern die Datenerfassungseinheit über Schleppkabel mit stationären Anschlußpunkten verbunden ist, kann außerdem dadurch das Crashfahrzeug im Hinblick auf die Aufprallgeschwindigkeit und eine Abweichung vom Aufprallpunkt beeinflußt werden.

Der Erfindung liegt im wesentlichen die Aufgabe zugrunde, eine Vorrichtung der eingangs genannten Art dahingehend zu verbessern, daß möglichst keine Beeinflussungen der Meßergebnisse durch die Datenerfassungseinheit auftreten.

Zur Lösung dieser Aufgabe ist erfindungsgemäß vorgesehen, daß die Datenerfassungseinheit auf einem auf der Führungsbahn hinter dem Fahrzeug geführten und von der Antriebseinrichtung angetriebenen Nachläuferfahrzeug angeordnet ist, und daß dem Nachläuferfahrzeug eine ein dessen Abbremsen vor dem Aufprall des Fahrzeuges auf das Hindernis bewirkende Bremseinrichtung zugeordnet ist, und daß zwischen dem Fahrzeug und dem Nachläuferfahrzeug eine Meßkabelverbindung vorgesehen ist, welche wenigstens eine den Abstand zwischen dem Fahrzeug im aufgeprallten Zustand und dem Nachläuferfahrzeug im abgebremsten Zustand überbrückende Länge aufweist.

Hierbei ist vorteilhaft, daß die Datenerfassungeinheit nicht jeweils in das Crashfahrzeug eingebaut werden muß und daher nach Durchführung eines Crashtests für weitere Crashtests umgehend zur Verfügung steht. Es entfällt der Zeitbedarf für das Installieren der Datenerfassungseinheit, und die Datenerfassungseinheit kann zentral für Crashversuche zur Verfügung stehen, so daß sich die Anschaffung mehrerer Datenerfassungseinheiten erübrigt. Es sind auch keine unterschiedlichen Vorrichtungen für die Aufnahme der Datenerfassungseinheit in Crashfahrzeuge unterschiedlicher Typen erforderlich. Im Hinblick auf die Einhaltung des Testgewichtes und der vorgegebenen Achslasten des Crashfahrzeuges treten keine Probleme auf, und es erfolgt keine negative Beeinflussung der Testergebnisse durch die Masse der Datenerfassungseinheit. Weiterhin wird infolge der Installation der Datenerfassungseinheit auf dem Nachläuferfahrzeug der Schwerpunkt des Crashfahrzeuges nicht verlagert. Da die Datenerfassungseinheit zentral für Crashversuche zur Verfügung steht, können Crashversuche kurzfristig disponiert werden, was zu einer großen Flexibilität in der Testart- und Testtermingestaltung führt. Abweichungen hinsichtlich der Aufprallgeschwindigkeit und des Aufprallpunktes des Crashfahrzeuges durch Schleppkabel treten nicht auf.

In zweckmäßiger Ausgestaltung der Erfindung kann vorgesehen sein, daß der Meßkabelverbindung zwischen dem Crashfahrzeug und der Datenerfassungseinheit eine Kabelspeichereinrichtung zugeordnet ist, von welcher bei einer Relativbewegung zwischen dem Fahrzeug und dem Nachläuferfahrzeug Meßkabel freigegeben wird. In besonders zweckmäßiger Ausgestaltung weist die Kabelspeichereinrichtung eine auf dem Nachläuferfahrzeug angeordnete und sich in dessen Längsrichtung erstreckende, an der dem Fahrzeug zugewandten Seite frei endende Schienenführungseinrichtung auf, an der das oder die Meßkabel mäanderartig an in entsprechenden Abständen an dem Meßkabel oder den Meßkabeln angebrachten, in die Schienenführungseinrichtung einfassenden und in dieser leicht beweglich geführten Führungselementen gehalten ist bzw. sind. Die Führungselemente weisen vorzugsweise Führungsrollen auf. Das zunächst auf die gleiche Geschwindigkeit wie das Crashfahrzeug beschleunigte Nachläuferfahrzeug wird so rechtzeitig vor dem Aufprall des Crashfahrzeuges auf das Hindernis abgebremst, daß das Crashfahrzeug in ausreichendem Abstand hinter dem Crashfahrzeug zum Stillstand kommt. Dabei werden die mäanderartigen Schlaufen des Meßkabels durch die Verzögerung des Nachläuferfahrzeugs selbsttätig abgeworfen, indem die leicht beweglich in der Schienenführungseinrichtung geführten Führungselemente infolge der Massenträgheit aus der frei endenden Schienenführungseinrichtung herausfallen. Das Crashfahrzeug legt hiervon unbeeinflußt seinen Weg bis zum Aufprall an dem Hindernis zurück, während die Meßkabelverbindung zwischen dem Crashfahrzeug und der auf dem Nachläuferfahrzeug befindlichen Datenerfassungseinheit unverändert aufrecht erhalten bleibt.

In zweckmäßiger Ausgestaltung der Erfindung kann weiterhin vorgesehen sein, daß zur Auslösung der Bremseinrichtung der Nachläuferfahrzeugs eine Bremskeileinrichtung vorgesehen ist. Die Anordnung arbeitet derart, daß eine Einwirkung auf eine dem Nachläuferfahrzeug zugeordnete Bremseinrichtung erfolgt, sobald ein entsprechendes mechanisches Teil der Nachläuferfahrzeuges Kontakt mit dem ortsfest, jedoch vorzugsweise verstellbar angeordneten Bremskeil bekommt.

Nachfolgend wird ein Ausführungsbeispiel der Erfindung anhand der Zeichnungen näher erläutert. Es zeigen:
- Fig. 1: eine schematische Seitenansicht der Vorrichtung mit einem zur Durchführung eines Crashs vorgesehenen Fahrzeug und einem in Fahrtrichtung dahinter angeordneten Nachläuferfahrzeug kurz vor Beginn des Tests;
- Fig. 2: eine Vorrichtung entsprechend Fig. 1 kurz nach Beginn des Abbremsvorgangs des Nachläuferfahrzeugs, während sich das Fahrzeug in Richtung auf das Hindernis bewegt;
- Fig. 3: die Vorrichtung gemäß Fig. 1, wobei das Fahrzeug kurz vor dem Aufprall auf das Hindernis dargestellt ist, während das Nachlauffahrzeug zum Stillstand gekommen ist und die Meßkabelverbindung durch die Verzögerung des Nachläuferfahrzeugs selbsttätig abgeworfen wurde.

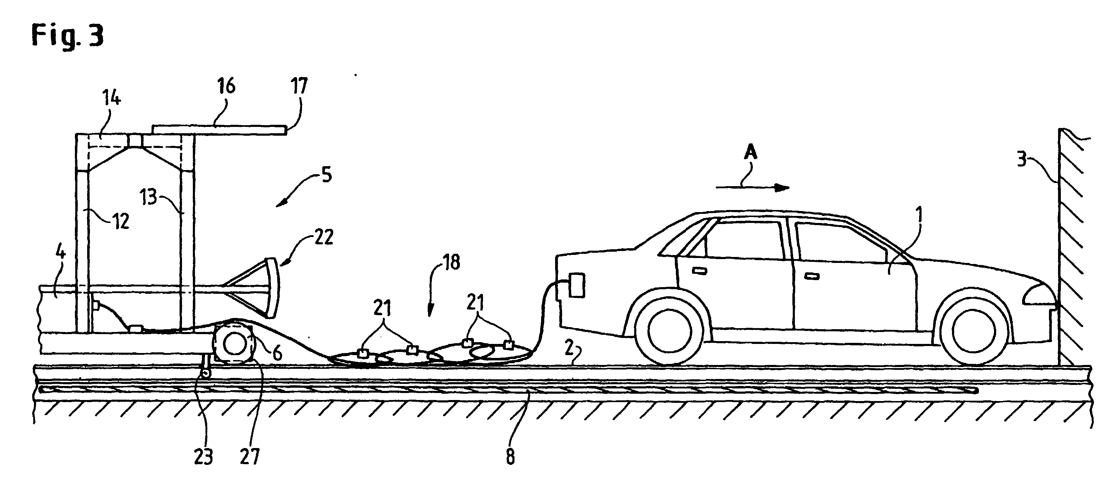

Zur Durchführung eines Crashtest wird ein Fahrzeug 1 auf einer Führungsbahn in Pfeilrichtung A beschleunigt, bis das Fahrzeug auf ein Hindernis 3 (Fig. 3) aufprallt. Das Fahrzeug 1 weist Meßwertaufnehmer (nicht dargestellt) auf, welche bei dem Aufprall (Crash) Meßdaten einer Datenerfassungseinheit 4 zuführen. Die Datenerfassungseinheit 4 befindet sich auf einem Nachläuferfahrzeug 5, welches mittels vorderer und hinterer Laufräder 6 und 7 auf der Führungsbahn 2 geführt ist.

In einer sich in Längsrichtung der Führungsbahn 2 erstreckenden Vertiefung ist ein (über eine nicht dargestellte Anordnung) in Pfeilrichtung B bewegbares Zugseil 8 angebracht. Das Zugseil dient zum Antrieb sowohl des Fahrzeugs 1 als auch des Nachläuferfahrzeugs 5. Hierzu ist an dem Fahrzeug 1 ein Verbindungselement 9 vorgesehen, mittels dessen das Fahrzeug 1 mit dem Zugseil 8 verbunden werden kann. Wenn das Zugseil 8 in Pfeilrichtung B bewegt wird, bewegt sich gleichzeitig auch das Fahrzeug in Pfeilrichtung A. Entsprechend ist eine Verbindungseinrichtung 10 vorgesehen, mittels derer das Nachläuferfahrzeug 5 mit dem Zugseil 8 verbindbar ist. Bei erfolgter Verbindung bewegt sich das Nachläuferfahrzeug 5 hinter dem Fahrzeug 1 auf der Führungsbahn 2.

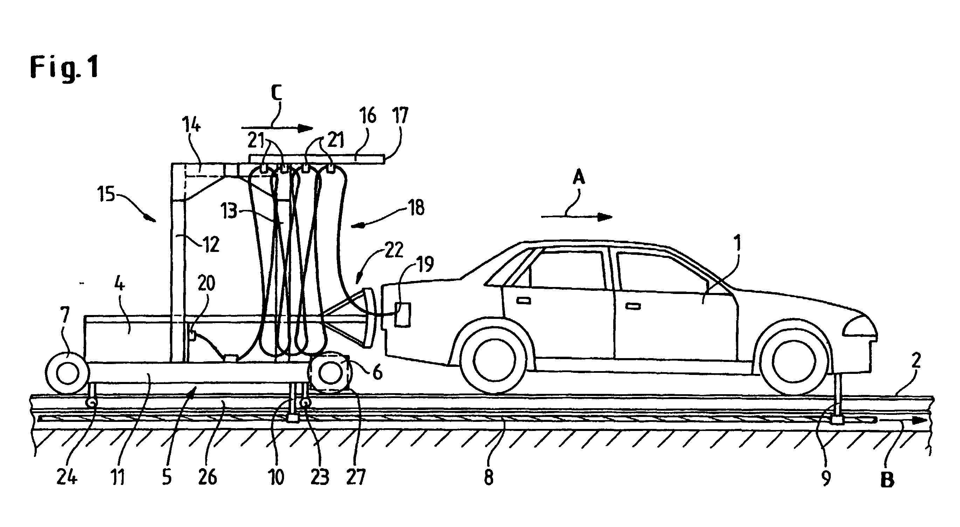

Das Nachläuferfahrzeug 5 weist einen Fahrzeugrahmen 11 auf, auf welchem die Datenerfassungseinheit 4 angebracht ist. Weiterhin ist an einer vertikale Teile 12, 13 und horizontale Teile 14 aufweisenden Rahmenanordnung 15 eine Schienenführungseinrichtung 16 vorgesehen, welche an ihrem dem Fahrzeug 1 zugewandten Stirnende 17 frei endet. Zwischen dem Fahrzeug 1 und der Datenerfassungseinheit 4 ist eine Meßkabelverbindung 18 vorgesehen, welche bei 19 mit dem Fahrzeug 1 und bei 20 mit der Datenerfassungseinheit 4 verbunden ist. Das Meßkabel ist, wie aus Fig. 1 ersichtlich, bei Beginn des Crashvorganges in mäanderförmigen Schlaufen geführt, wobei jeweils die oberen Umkehrbereiche der Schlaufen außen an dem Meßkabel angebrachte Führungselemente 21 aufweisen, welche mittels Führungsrollen (nicht dargestellt) in nach unten offene Schlitze der Schienenführungseinrichtung 16 eingreifen (etwa vergleichbar mit der Anbringung einer Gardine an in einer Führungsschiene angebrachten Führungsrollen). Entsprechend der Darstellung in Fig. 1 ist die Schienenführungseinrichtung 16 an dem Stirnende 17 offen, so daß das Meßkabel mit den Führungselementen 21 von einer Bedienungsperson vom rechten Stirnende her in die Schienenführungseinrichtung 21 eingeführt werden kann. Die Anzahl der mäanderartigen Schlaufen bzw. die Länge der Meßkabelverbindung ist derart gewählt, daß auf jeden Fall der Abstand zwischen dem Fahrzeug 1 in seinem auf das Hindernis 3 aufgeprallten Zustand und dem vorher abgebremsten Nachläuferfahrzeug 5 überbrückt wird.

Das Nachläuferfahrzeug 5 weist außerdem zu Rangierzwecken ein Gestell 22 auf. Weiterhin ist das Nachläuferfahrzeug mittels vorderer und hinterer Führungsrollenanordnungen 23, 24 in einer sich in Längsrichtung der Führungsbahn erstreckenden Führungsschiene 26 geführt. Das Nachläuferfahrzeug 5 weist zudem eine schematisch dargestellte und mit 27 bezeichnete Bremseinrichtung auf.

Die Arbeitsweise der Vorrichtung ist wie folgt:

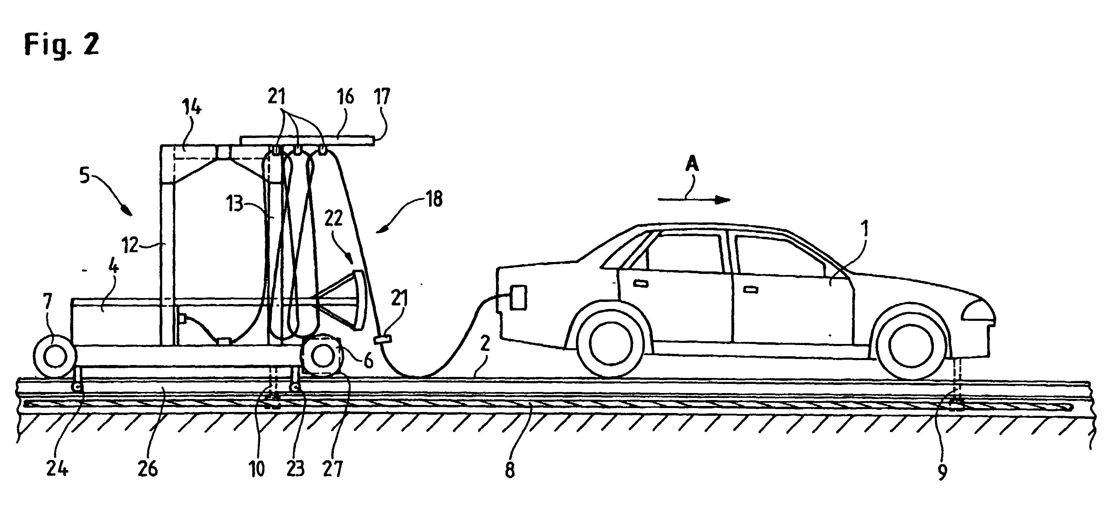

Ausgehend von der Position in Fig. 1 werden über das in Pfeilrichtung B bewegte Zugseil 8 und die Verbindungen 9 und 10 sowohl das Fahrzeug 1 als auch das Nachläuferfahrzeug 5 in Prallrichtung A beschleunigt. Nach Erreichen einer bestimmten Position wird die Verbindung 10 zwischen Zugseil 8 und Nachläuferfahrzeug 5 gelöst, und das Nachläuferfahrzeug 5 wird abgebremst, während sich das Fahrzeug 1 in Pfeilrichtung A weiterbewegt (Fig. 2). Die Auslösung der Bremseinrichtung 27 des Nachläuferfahrzeuges erfolgt dabei über eine (nicht dargestellte) Bremskeileinrichtung. Wie aus Fig. 2 ersichtlich, rutschen während des Abbremsens des Nachläuferfahrzeugs 5 die Führungselemente 21 infolge der Massenträgheit in Pfeilrichtung C, bis sie aus dem freien Ende 17 der Schienenführungseinrichtung austreten und somit abgeworfen werden. Fig. 3 zeigt die Situation bei abgebremsten Nachläuferfahrzeug 5 und in Pfeilrichtung A bewegtem Fahrzeug 1 kurz vor dem Aufprall auf das Hindernis 3. Wie ersichtlich, sind in dieser Phase sämtliche Führungselemente 21 über das Stirnende 17 herausgetreten, so daß das Meßkabel selbsttätig abgeworfen ist. Auf diese Weise bleibt die Meßkabelverbindung 18 zwischen dem Fahrzeug 1 und der Datenerfassungseinheit 4 auch nach dem Abbremsen des Nachläuferfahrzeuges 5 aufrecht erhalten, wodurch die während des unmittelbar nachfolgenden Aufpralls bzw. Crashs ermittelten Meßdaten von der Datenerfassungseinheit 4 aufgenommen werden könne, ohne daß das Meßergebnis durch die Datenerfassungseinheit beeinflußt wird.

## Patentansprüche

1. Vorrichtung zur Durchführung eines Crashtests bei einem Fahrzeug (1), mit einer Führungsbahn (2) für ein Fahrzeug und einer Antriebseinrichtung (8) zur Beschleunigung eines Fahrzeugs, und mit einer einem Fahrzeug zuzuordnenden Datenerfassungseinheit, dadurch gekennzeichnet, daß die Datenerfassungseinheit (4) auf einem Nachläuferfahrzeug (5) angeordnet ist, welches auf der Führungsbahn (2) hinter einem Fahrzeug (1) geführt und von der Antriebseinrichtung (8) angetrieben werden kann, und daß dem Nachläuferfahrzeug (5) eine Bremseinrichtung (27) zugeordnet ist, die das Abbremsen des Nachläuferfahrzeugs vor dem Aufprall eines Fahrzeugs (1) auf ein Hindernis (3) bewirken kann, und daß eine Meßkabelverbindung (18) vorgesehen ist, welche wenigstens eine Länge aufweist, die den Abstand zwischen einem Fahrzeug (1) im aufgeprallten Zustand und dem Nachläuferfahrzeug (5) im abgebremsten Zustand überbrücken kann.

2. Vorrichtung nach Anspruch 1, dadurch gekennzeichnet, daß der Meßkabelverbindung (18) eine Kabelspeichereinrichtung zugeordnet ist, von welcher bei einer Relativbewegung zwischen einem Fahrzeug (1) und dem Nachläuferfahrzeug (5) Meßkabel (18) freigegeben werden kann.

3. Vorrichtung nach Anspruch 2, dadurch gekennzeichnet, daß die Kabelspeichereinrichtung eine auf dem Nachläuferfahrzeug (5) angeordnete und sich in dessen Längsrichtung erstreckende, an der im Benutzungszustand einem Fahrzeug (1) zugewandten Stirnseite (17) frei endende Schienenführungseinrichtung (16) aufweist, an der das oder die Meßkabel (18) mäanderartig an in entsprechenden Abständen an dem Meßkabel oder den Meßkabeln angebrachten, in die Schienenführungseinrichtung (16) einfassenden und in dieser leicht beweglich geführten Führungselementen (21) gehalten ist bzw. sind.

4. Vorrichtung nach Anspruch 3, dadurch gekennzeichnet, daß die Führungselemente (21) Führungsrollen aufweisen.

5. Vorrichtung nach einem der Ansprüche 1 bis 4, dadurch gekennzeichnet, daß zur Auslösung der Bremseinrichtung (27) des Nachläuferfahrzeugs (5) eine Bremskeileinrichtung vorgesehen ist.

## Claims

1. Device for executing a crash test on a vehicle (1) with a guiding path (2) for a vehicle and a drive installation (8) for the acceleration of a vehicle, and with a data registering unit assigned to a vehicle, characterised in that the data registering unit (4) is positioned on a trailing vehicle (5), which can be guided on the guiding path (2) behind a vehicle (1) and driven by the drive installation (8), and in that a braking installation (27) is assigned to the trailer vehicle (5) , wherein this braking installation (27) can bring about the braking of the trailing vehicle before the impact of a vehicle (1) on an obstacle (3), and in that a measuring cable connection (18) is provided which has at least a length which can bridge the gap between a vehicle (1) in the impacted state and the trailing vehicle (5) in the braked state.

2. Device according to Claim 1 characterised in that the measuring cable connection (18) is associated with a cable storage installation, from which in the event of a relative movement between a vehicle (1) and the trailing vehicle (5) measuring cable (18) can be released.

3. Device according to Claim 2 characterised in that the cable storage installation has positioned on the trailing vehicle (5) and extending in its longitudinal direction, free ending on the front side turned towards the vehicle (1) in the status of use, a runner guide installation (16), wherein on this runner guide installation (16) the measuring cable / cables (18) is / are held in a meandering way on guide elements (21) positioned in corresponding intervals on the measuring cable / cables, bordering in the runner guide installation (16) and positioned in such a way that they can be lightly moved within this.

4. Device according to Claim 3 characterised in that the guide elements (21) have guide rolls.

5. Device according to one of the Claims 1 to 4 characterised in that for releasing the braking installation (27) of the trailing vehicle (5) a brake wedge installation is provided.

## Revendications

1. Dispositif pour effectuer un essai de collision sur un véhicule (1), comportant une piste de guidage (2) destinée à un véhicule et un système d'entraînement (8) pour l'accélération d'un véhicule, et une unité de saisie de données devant être affectée à un véhicule, caractérisé par le fait que l'unité (4) de saisie de données est disposée sur un véhicule suiveur (5) qui peut être guidé sur la piste de guidage (2), derrière un véhicule (1), et peut être entraîné par le système d'entraînement (8) ; par le fait qu'un système de freinage (27), affecté au véhicule suiveur (5), peut provoquer le freinage dudit véhicule suiveur avant l'impact d'un véhicule (1) sur un obstacle (3) ; et par le fait qu'il est prévu une liaison (18) par câble mesureur, présentant au moins une longueur pouvant combler la distance entre un véhicule (1) à l'état entré en collision, et le véhicule suiveur (5) à l'état freiné.

2. Dispositif selon la revendication 1, caractérisé par le fait qu'un système de stockage de câble(s) est affecté à la liaison (18) par câble mesureur, système par lequel un câble mesureur (18) peut être libéré lors d'un mouvement relatif entre un véhicule (1) et le véhicule suiveur (5).

3. Dispositif selon la revendication 2, caractérisé par le fait que le système de stockage de câble(s) comporte un système (16) de guidage par rail qui est disposé sur le véhicule suiveur (5), s'étend dans la direction longitudinale de ce dernier, s'achève librement à la face extrême (17) tournée vers un véhicule (1) à l'état d'utilisation, et sur lequel le ou les câble(s) mesureur(s) (18) est ou sont respectivement retenu(s), sous forme de méandres, sur des éléments de guidage (21) implantés à des distances correspondantes sur le câble mesureur ou les câbles mesureurs, s'engageant dans ledit système (16) de guidage par rail et guidés, dans ce dernier, avec légère mobilité.

4. Dispositif selon la revendication 3, caractérisé par le fait que les éléments de guidage (21) sont munis de galets de guidage.

5. Dispositif selon l'une des revendications 1 à 4, caractérisé par le fait qu'un mécanisme à coin de freinage est prévu pour déclencher le système de freinage (27) du véhicule suiveur (5).
